# EUROPEAN PATENT APPLICATION

(11) **EP 2 355 381 A1**
(43) Date of publication of application: **10.08.2011**
(21) Application number: 09178508.9
(22) Date of filing: 09.12.2009
(51) Int. Cl.: H04H 40/18, H04H 20/10, H04H 20/26, H04H 20/22

(54) **Audio processing device and method for processing audio signals**

(71) Applicant: Alpine Electronics, Inc., Tokyo, 141 (JP)
(72) Inventor: Schwemmer, Klaus, 70567 Stuttgart (DE)
(74) Representative: Klunker . Schmitt-Nilson . Hirsch

(57) **Abstract**

An audio processing device comprises a first input (IN1) configured to receive a first audio signal (31) indicative of an analog or digital audio broadcasting signal (21) and a second input (IN2) configured to receive a second audio signal (32) indicative of an analog or digital audio broadcasting signal (22), and a signal processing circuit (11) coupled to receive the first audio signal (31) and the second audio signal (32) and configured to determine a time delay (At) between the first audio signal (31) and the second audio signal (32). The signal processing circuit (11) is configured to slow forward one of the first and second audio signals (31, 32) to produce a slow forwarded audio signal (50) within a particular period of time (t1) in response to the determined time delay (At), wherein the slow forwarded audio signal (50) is produced such that a time difference between the slow forwarded audio signal and the other of the first and second audio signals is reduced within the period of time (t1). The audio processing device further comprises an output (OUT) configured to supply an audio output signal (60) derived from the slow forwarded audio signal (50) or the other of the first and second audio signals (31, 32). A seamless switching between reproducing an analog audio broadcasting signal and a digital audio broadcasting signal without or with less potential mute time periods is possible.

## Description

### Background

### Field of the invention

The present invention relates to an audio processing device which is configured to receive a first audio signal indicative of an analog or digital audio broadcasting signal and a second audio signal indicative of an analog or digital audio broadcasting signal. Moreover, the invention relates to a method for processing audio signals receiving a first audio signal indicative of an analog or digital audio broadcasting signal and a second audio signal indicative of an analog or digital audio broadcasting signal.

### Description of the Related Art

Generally, a system for processing audio signals may be a mobile or stationary electronic device which comprises an audio processing unit which receives signals indicative of a broadcasting signal received by an audio receiving unit. For example, an audio processing unit may comprise or may be coupled to one or multiple receivers for receiving broadcasting signals, wherein each of the receivers may comprise one or multiple tuners which are capable to tune to a particular frequency band of a broadcasting channel for receiving broadcasting signals. The receivers may be coupled to a respective antenna for receiving a respective broadcasting signal having a particular frequency or baseband.

Generally, systems for processing audio signals are known which are capable of receiving and processing, both, analog audio broadcasting signals and digital audio broadcasting signals. For example, an analog audio broadcasting signal may be an amplitude-modulated (AM) audio broadcasting signal or a frequency-modulated (FM) audio broadcasting signal. On the other hand, a digital audio broadcasting signal may be a digital audio broadcasting (DAB) signal according to the digital audio broadcasting system "DAB" which is particularly implemented in European countries. Similar to the described DAB technology the digital audio broadcasting signal may correspond to all other digital audio technologies like DRM (Digital Radio Mondiale), DMB Audio (Digital Multimedia Broadcasting) or HD Radio (trademark of Ibiquity).

The broadcasting signals are provided by one or more external information providers, such as a radio and/or an internet provider which provides, both, analog audio broadcasting signals and digital audio broadcasting signals with corresponding audio information. In other words, the same or corresponding audio information (e.g. the same program or channel) is transmitted through each of the analog audio broadcasting signals and the digital audio broadcasting signals in parallel, wherein the analog audio broadcasting signals are received by a receiver for receiving analog audio broadcasting signals, whereas the digital audio broadcasting signals are received by a receiver for receiving digital audio broadcasting signals. When corresponding audio information (e.g. the same program or channel) is available on both of the different receivers implemented in a common audio processing system, one of the analog or digital audio broadcasting signals may be used for providing audio content to the user, for example the receiver is selected which provides the best reception quality. On the other hand, the user may be provided with a possibility to switch between analog and digital broadcasting system according to particular preferences.

In an analog audio broadcasting system, the analog audio information, such as AM or FM audio information, is transmitted from an analog signal broadcasting station in the form of an analog audio broadcasting signal. In a digital audio broadcasting system, digital audio information is transmitted from a digital signal broadcasting station or streaming (e.g. via Internet) in the form of a digital audio signal. In a situation in which the same program or channel is transmitted from each of the analog signal broadcasting station and the digital signal broadcasting station in parallel, there may be the case that the analog audio broadcasting signal and the digital audio broadcasting signal are not transmitted at exactly the same time, but are transmitted with a time difference between each other from the analog signal broadcasting station and the digital signal broadcasting station, respectively. Further, the processing of the audio information at the receiver side may also cause a time difference or time delay between an audio signal output from an analog audio broadcasting signal receiver and an audio signal output from a digital audio broadcasting signal receiver.

As a result, audio content processed from an analog audio broadcasting signal may be provided to the user at a different time as compared to audio content processed from a digital audio broadcasting signal since the respective audio content is reproduced by the analog receiving and processing system at a time different from the digital receiving and processing system. Also on the sender side the processing of analog and digital signals may cause a time difference at the broadcasting antenna. Furthermore the transmission of same content via independent sources (Internet vs. Broadcasting System) does not guarantee any synchronisation between the received signals. This may cause problems when switching between an analog and digital audio source since audio content derived from the analog audio source is not provided at exactly the same time as audio content derived from a digital audio source. On the other hand, it would be beneficial to provide substantially seamless switching between both sources with the result that switching between both sources is not audible to the user.

In EP 0 863 632 B1 there is described an apparatus for receiving audio broadcasting signals comprising a digital audio broadcasting signal receiving portion for receiving a digital audio broadcasting signal to obtain a first reproduced sound signal and an analog audio broadcasting signal receiving portion for receiving an analog audio broadcasting signal to obtain a second reproduced sound signal. The apparatus further comprises a variable delay portion for delaying the second reproduced sound signal obtained from said analog audio broadcasting signal receiving portion to have a variable delay time. Further, a signal matching control portion is provided for controlling the variable delay portion to reduce a difference in delay time between the second reproduced sound signal obtained through said variable delay portion and the first reproduced sound signal obtained from said digital audio broadcasting signal receiving portion. The apparatus is adapted for the case that the sound signal reproduced from the analog audio broadcasting signal is obtained earlier than the reproduced sound signal obtained from the digital audio broadcasting signal. Accordingly, the reproduced sound signal obtained from the analog audio broadcasting signal receiving portion is delayed in order to correspond with the time of reproducing the sound signal obtained from the digital audio broadcasting signal receiving portion. In this regard, a problem may occur when the user switches between different programs or channels so that the corresponding analog and digital audio broadcasting signals change according to the new channel selection. This may cause mute time periods until the delay time for delaying the reproduced analog sound signal has expired. Such mute time periods will be audible by the user depending on the time difference between the analog and digital audio broadcasting signals which are transmitting corresponding audio content.

### Summary of the invention

It is therefore an object of the present invention to provide an audio processing device and method for processing audio signals which enable a seamless switching between reproducing an analog audio broadcasting signal and a digital audio broadcasting signal without or with less potential mute time periods when switching to reproduction of audio content processed from the earlier one of the broadcasting signals.

In a first aspect, there is provided an audio processing device according to the features of claim 1. In a further aspect, there is provided a method for processing audio signals according to the features of claim 10.

In a first aspect, there is provided an audio processing device comprising a first input configured to receive a first audio signal indicative of an analog or digital audio broadcasting signal and a second input configured to receive a second audio signal indicative of an analog or digital audio broadcasting signal. The audio processing device further comprises a signal processing circuit coupled to receive the first audio signal and the second audio signal and configured to determine a time delay between the first audio signal and the second audio signal. The signal processing circuit is configured to slow forward one of the first and second audio signals to produce a slow forwarded audio signal within a particular period of time in response to the determined time delay, wherein the slow forwarded audio signal is produced such that a time difference between the slow forwarded audio signal and the other of the first and second audio signals is reduced within the period of time. The audio processing device further comprises an output configured to supply an audio output signal derived from the slow forwarded audio signal or the other of the first and second audio signals.

Particularly, the first and second audio signals transmit corresponding or substantially the same audio content. The earlier one of the first and second audio signals derived from an analog audio broadcasting signal or digital audio broadcasting signal, respectively, may be delayed within a particular period of time until it is synchronous with the respective other of first and second audio signals, so that from this point of time a seamless switch between both audio sources is possible, particularly after a change of the program or channel has taken place. The slow forwarding of one of the first and second audio signals may be established in a way that this is not or hardly audible for the user, for example by setting the particular period of time for generating a slow forwarded audio signal appropriately.

According to an embodiment of the invention, the signal processing circuit is configured to provide the slow forwarded audio signal to the output for audio output from a speaker during the period of time. In this way, mute time periods or interruption of the audio reproduction may be avoided since audio content is output from a speaker derived from the slow forwarded audio signal.

According to another embodiment, the signal processing circuit is configured to slow forward one of the first and second audio signals until the slow forwarded audio signal is synchronous to the other of the first and second audio signals. Therefore, after the period of time in which the slow forwarded audio signal has been produced, seamless switching between an analog and digital audio source may be established which is not or hardly audible.

According to another embodiment, a selecting portion for selecting the slow forwarded audio signal or the other of the first and second audio signals is coupled to the output of the audio processing device. For example, the selecting portion is coupled to a control input for receiving a user's instruction for selecting one of the first audio signal and the second audio signal for reproducing audio content.

In a further embodiment, the signal processing circuit comprises a signal correlating portion coupled to receive the first audio signal and the second audio signal to determine the time delay between them. Moreover, the audio processing device may comprise at least one memory circuit for temporarily storing at least one of the first audio signal and the second audio signal. Particularly, the memory circuit stores at least the one of the first and second audio signals which is prior to the respective other of the first and second audio signals.

In a further aspect, there is provided a method for processing audio signals which comprises receiving a first audio signal indicative of an analog or digital audio broadcasting signal and a second audio signal indicative of an analog or digital audio broadcasting signal, determining a time delay between the first audio signal and the second audio signal, slow forwarding one of the first audio signal and the second audio signal to produce a slow forwarded audio signal within a particular period of time in response to the determined time delay, wherein the slow forwarding is adjusted such as to reduce a time difference between the slow forwarded audio signal and the other of the first and second audio signals within the period of time, and supplying an audio output signal derived from the slow forwarded audio signal or the other of the first and second audio signals.

Further advantageous features and embodiments of the invention may be taken from the dependent claims.

### Brief description of the Drawings

Aspects and embodiments of an audio processing device and method for processing audio signals in accordance with the invention will now be described with reference to the drawings, in which:
- Fig. 1: shows an exemplary signal diagram depicting an analog and a digital audio broadcasting signal with corresponding audio information having a time delay between them,
- Fig. 2: shows an exemplary schematic block diagram of an audio processing device according to an embodiment of the invention,
- Fig. 3: shows an exemplary signal diagram depicting an analog and a digital audio broadcasting signal with corresponding audio information having a time delay between them, and possible switching options between analog and digital audio broadcasting signal,
- Fig. 4: shows an exemplary signal diagram depicting an analog and a digital audio broadcasting signal with corresponding audio information when processed according to an embodiment of the invention.

### Detailed Description of Embodiments

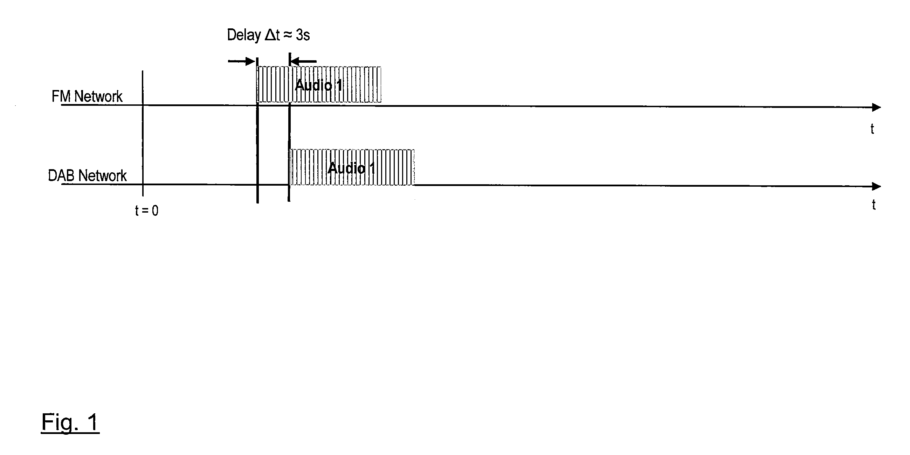

In Fig. 1, there is shown an exemplary signal diagram which depicts an analog audio broadcasting signal and a digital audio broadcasting signal with corresponding audio information or content. For example, an analog audio broadcasting signal such as a FM audio information signal is transmitted from an analog signal broadcasting station using a corresponding network, which is denoted in Fig. 1 as "FM network". The content of the FM audio information signal is denoted as "Audio 1". Furthermore, a digital audio broadcasting signal such as a DAB signal is transmitted from a digital signal broadcasting station using a transmission network which is designated in Fig. 1 as "DAB network". The content of the DAB audio information signal is designated as "Audio 1 ", which indicates that the contents of the FM audio information signal and the DAB audio information signal are corresponding to each other. Corresponding audio content in the context of the present disclosure shall mean that the audio content which is audible by the user is substantially the same when reproduced from the analog audio source or the digital audio source.

As can be seen from the exemplary signal diagram as shown in Fig. 1, the analog and digital audio broadcasting signals, particularly the FM and DAB signals, are not time synchronized, as for example in European countries. For example, there may be a time delay of Δt between the analog audio broadcasting signal and the digital audio broadcasting signal. For example, such time delay At may be 3 seconds, wherein usually the analog audio broadcasting signal is the earlier one of these two signals as a matter of the more time consuming processing of the digital audio information.

Generally, digital audio information such as contained in the DAB signal has a linking information to analog audio information, such as contained in the FM signal, to enable tuning to a signal which has the same audio content. Particularly, the "broadcasting landscape" should be known to the system, for example in the form of a station or channel list of analog and digital broadcasting. In this way, the system knows which of the analog and digital broadcasting signals at a particular frequency or in a particular frame, respectively, include the same or corresponding audio content for switching between them. Further, DAB-DAB linking (same audio content on different ensemble) is mostly not synchronized as well. Therefore, DAB-DAB seamless switching faces substantially the same problems as the switching between analog and digital audio sources, as described above. Moreover, other radio standards such as DRM (Digital Radio Mondial and switching between DRM and AM signals), and HD Radio Digital only mode face the same difficulties of unsynchronous transmission.

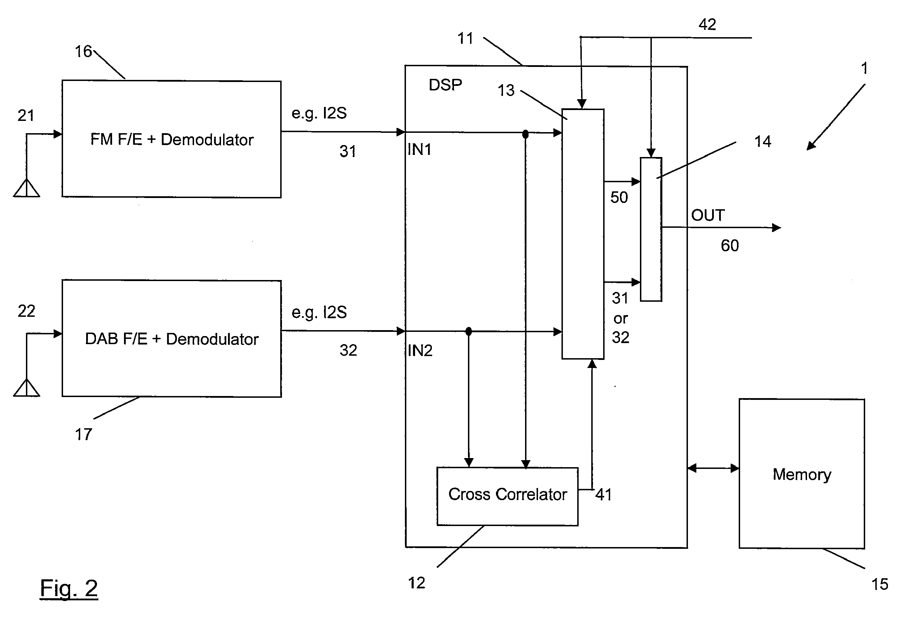

In Fig. 2, there is shown a schematic block diagram of an audio processing device according to an exemplary embodiment of the invention. Particularly, the audio processing device is part of an audio processing system 1 which comprises an analog audio receiving circuit 16 having an input for receiving an analog audio broadcasting signal 21. For example, the input may be coupled to an antenna for receiving FM audio information signals. According to an example, the analog audio receiving circuit 16 is a commonly known front end FM receiver ("FM F/E") including a demodulator and an analog-to-digital converter. Further, the audio processing system 1 comprises a digital audio receiving circuit 17 having an input for receiving a digital audio broadcasting signal 22. For example, the input of the digital audio receiving circuit 17 may be coupled to an antenna for receiving DAB audio information signals and may include a commonly known front end DAB receiver ("DAB F/E") and a demodulator. An output of the analog audio receiving circuit 16 is coupled to a first input IN1 of an audio processing device 11 to provide a first audio signal 31. This signal is indicative of the analog audio broadcasting signal 21 received from the antenna and the content thereof, particularly it has been derived or processed therefrom and transmits audio content which is the same or corresponding to the audio content of the broadcasting signal 21. Further, an output of the digital audio receiving circuit 17 is coupled to a second input IN2 of the audio processing device 11 to provide a second audio signal 32 which is indicative of the digital audio broadcasting signal 22 received via the antenna and the content thereof. In the present embodiment, the analog audio receiving circuit 16 and the digital audio receiving circuit 17 are coupled to the first input IN1 and to the second input IN2, respectively, through at least one signal path for transmitting digital signals. For example, the signal path for transmitting digital signals may be a digital audio interface such as the commonly known I2S system. In this way, in the present embodiment, the first audio signal 31 and the second audio signal 32 are respective digital signals provided to the audio processing device 11.

The signal processing circuit 11 may be, in the present embodiment, implemented as a digital sound processor (DSP) or part thereof. As described above, it is coupled to receive the first audio signal 31 at the first input IN1 and the second audio signal 32 at the second input IN2, and it comprises circuitry to determine a time delay, such as said time delay At as shown in Fig. 1, between the first audio signal 31 and the second audio signal 32. Particularly, the DSP 11 comprises or implements a signal correlating portion 12 which is coupled to receive the first audio signal 31 and the second audio signal 32 to determine, in a commonly known manner, a time delay At between them.

The signal processing circuit 11 is configured to slow forward one of the first and second audio signals 31, 32 or a signal derived therefrom in order to compensate for the time delay Δt between audio signals 31 and 32. In this regard, Fig. 2 schematically shows a slow forwarding section 13 (which may be a processor system of the DSP and may also perform other processing tasks of the DSP) which is coupled to receive the first audio signal 31 and the second audio signal 32 or a respective signal derived therefrom. The slow forwarding section 13 further receives a control signal 41 from the cross correlator 12. Accordingly, one of the first and second audio signals 31, 32 is slow forwarded within a particular period of time in response to, particularly depending on, the determined time delay Δt. Particularly, the correlating portion 12 produces a control signal 41 depending on the determined time delay Δt, wherein in response to the control signal 41 the slow forwarding section 13 produces a slow forwarded audio signal within a particular period of time derived from one of the first and second audio signals 31, 32. In this way, the slow forwarding section 13 outputs a slow forwarded audio signal 50 and, in parallel, outputs the respective other of the first and second audio signals 31 or 32 to a selecting portion 14. By means of the selecting portion 14, the slow forwarded audio signal 50 or the other of the first and second audio signals 31, 32 may be selected, as described in more detail below. To this end, the selecting portion 14 may receive a user's instruction 42 from a corresponding control interface. An output OUT of the audio processing device 11 is configured to supply an audio output signal 60 derived from the slow forwarded audio signal 50 or the other of the first and second audio signals 31, 32. More particularly, in the present embodiment the output OUT is coupled to an output of the selecting portion 14.

The audio processing system 1 further comprises at least one memory circuit 15, which is in the present example an external memory, but which may also be an internal memory of the signal processing circuit 11, or may be a distributed memory system comprising an internal memory and an external memory. The memory circuit 15 is configured for temporarily storing at least one of the first audio signal 31 and the second audio signal 32 or a signal derived therefrom over a particular period of time in order to compensate for the time delay and time shift, as set out in more detail below. Particularly, in the memory circuit 15 at least the one of the first and second audio signals 31, 32 is stored which is prior to the respective other of the first and second audio signals, so that the earlier one of these signals is temporarily stored and may be reproduced at a later time.

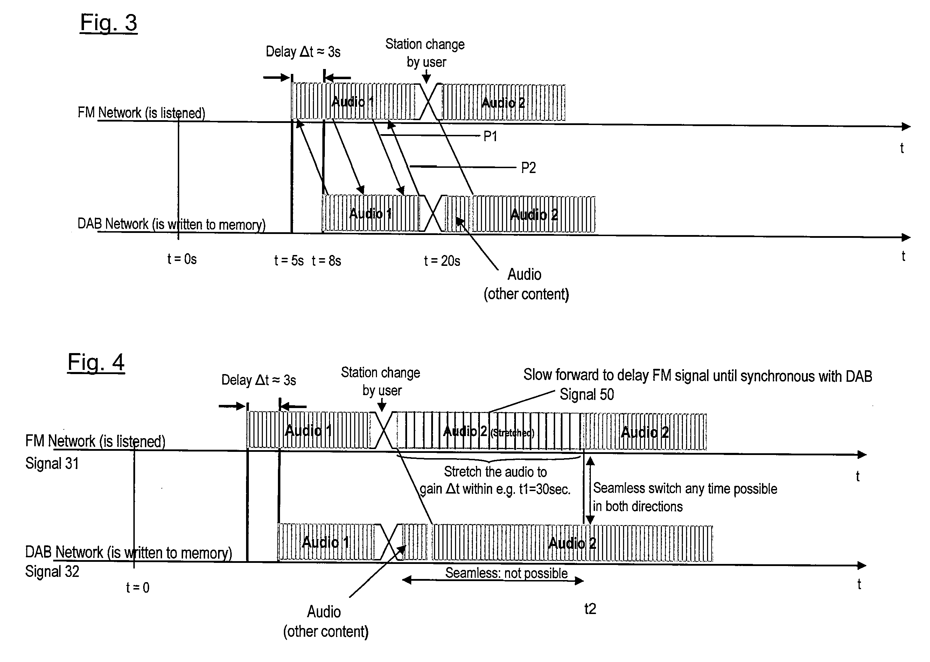

In the following, the function of the audio processing system 1 as shown in Fig. 2 will be explained in connection with the signal diagrams of Figs. 3 and 4.

In Fig. 3, there are shown possible switching options between analog and digital audio broadcasting signals. For example, switching options are described between an FM network and a DAB network. As shown in the first row in Fig. 3, an analog audio broadcasting signal is received from an FM network and is currently reproduced by a corresponding audio processing system (is listened to by the user). In parallel, a digital audio broadcasting signal is received from a DAB network, the digital audio broadcasting signal having corresponding content as compared to the analog audio broadcasting signal, but having a time delay Δt of approximately 3s, as set out above with reference to Fig. 1. The arrows P1 and P2 indicate a respective switching direction between FM reception and DAB reception. As shown in Fig. 3, at an exemplary time of t = 8s a switching from DAB reception to FM reception is possible since at the time of t = 8s the FM signal has already been received at the time of t = 5s, so that seamless switching to analog reception is possible. On the other hand, a seamless switching between FM and DAB reception is not possible since at the time of the desired switching from the FM reception, the corresponding DAB signal has not yet been received since it is delayed by Δt = 3s. In this case, an audio reproduction interruption may occur during a time period of 3s until the corresponding DAB signal is received. In this regard, arrow P1 designates a switching event in which seamless switching is not possible, whereas the arrow P2 designates a switching direction in which seamless switching is possible. At the time of t = 20s, a station or program change is demanded by the user, so that the content of, both, the received and processed FM signal and DAB signal changes from "Audio 1" to "Audio 2". As a matter of the time delay Δt between FM and DAB signal, there is a time period of 3s after the switching event in which the content of the DAB signal is undefined since the DAB signal with content "Audio 2" is received only after the time delay when the station change by the user has occurred. In this regard, Fig. 3 shows the problems of existing audio processing systems, as described above, in that seamless switching is not possible in any direction between different broadcasting signals.

In Fig. 4, a signal diagram corresponding to that of Fig. 3 is shown, but which implements a process according to an embodiment of the invention.

More particularly, a signal 31 is received which is indicative of an FM signal, and a signal 32 is received in parallel which is indicative of a DAB signal. As a matter of the time difference between the FM and DAB signals, there is a corresponding time difference between the signals 31 and 32 processed by the receiving circuits 16 and 17 as shown in Fig. 2. When receiving the signals 31 and 32, the correlating portion 12 determines the time delay Δt between the signals 31 and 32 and outputs a corresponding control signal 41 to the slow forwarding section 13. In the present example, after a station change by the user (control signal 42), the slow forwarding section 13 is configured to slow forward the audio signal 31 to produce a slow forwarded audio signal 50 within a particular period of time t1, which may be in the present non-limiting example t1 = 30s. Slow forwarding of an audio signal is also known as stretching an audio signal (also known as speed modified audio signal or time scale modified audio signal). The effect of slow forwarding the audio signal is that the audio content is reproduced within a greater period of time than in case of normal reproduction of the corresponding audio signal, in order to compensate for the time delay of Δt.

For example, slow forwarding of one of the audio signals 31 and 32 may be established by reproducing respective samples of audio information twice, so that one sample of audio information is reproduced twice consecutively. Another technique may be to interpolate a sample of audio information from two samples of audio information to generate a third sample of audio information which may be reproduced between the two samples of audio information. In this regard, however, the skilled person will be aware that also other techniques for slow forwarding or stretching audio signals are known and available to the person skilled in the art. For example, such known techniques are described in EP 0 865 026 A2, EP 2 001 013 A2, or US 2007/0078662 A1.

During the time period t1 the slow forwarded audio signal 50 as well as the respective other one of the first and second audio signals 31, 32 or a signal derived therefrom are provided to the selecting portion 14. In case that the user wants to listen to the FM source, slow forwarded audio signal 50 is provided to the output OUT as the audio output signal 60 to an audio reproduction device, such as a speaker. Advantageously, the slow forwarding is established such that it does not significantly degrade the audio performance to the listener. On the other hand, there is no audio interruption or mute time period involved with compensating the time delay Δt between FM signal and DAB signal. If, on the other hand, the user wants to listen to DAB audio source, then the signal 32 or a signal derived therefrom is provided as the output signal 60.

In the event that the time delay between signal 31 and signal 32 is vice versa, i.e. the signal 31 is delayed with respect to signal 32, then the signal 32 may be slow forwarded to produce the slow forwarded audio signal 50 and provided to the selecting portion 14, whereas signal 31 or a signal derived therefrom is provided directly to the selecting portion 14. Further, in other embodiments of the invention, the audio signal 31 may be indicative of a digital audio broadcasting signal, and the audio signal 32 may be indicative of an analog audio broadcasting signal. Further, the case may be that both audio signals 31 and 32 are indicative of a respective analog audio broadcasting signal or a respective digital audio broadcasting signal (for example, in case of FM-FM switching, or DAB-DAB switching, respectively).

With slow forwarding one of the signals 31 and 32 it is possible to compensate for the time delay Δt between the signals. Particularly, the slow forwarded audio signal 50 is produced for a period of time t1 until the delayed or slow forwarded audio signal is synchronous with the respective other of the signals 31, 32. In the diagram of Fig. 4, at the time t2 the slow forwarded audio signal 50 derived from the audio signal 31 is synchronous to the second audio signal 32, so that from time t2 on a seamless switch between FM reception and DAB reception is possible in both directions as there is no time difference between the respective audio content.

The principles of the present invention may also be applied in audio processing systems in which digital receiver systems may be faced with the problem of degradation of the received broadcasting signal (e.g., when implemented in a vehicle, and the vehicle enters into a tunnel). Such degradation of the received digital signal may cause "chirping", which is high frequency sound created by the demodulator because of a high bit error rate when processing the received digital audio broadcasting signal. In case that all digital signals are delayed in the same way (without user notification) and stored in the memory, a switch to receiving and processing the analog audio broadcasting signal (which may be, nevertheless, a noisy signal) can be done, before these chirps happen. By means of the present invention, such a switch may be done in a seamless manner.

While this detailed description has set forth some embodiments of the present invention, the appended claims cover also other embodiments of the present invention which may differ from the described embodiments according to various modifications and some aspects. For example, as described above, the principles of the invention may be used for switching between a DAB and FM system, but may also be used for switching between a DRM and AM broadcasting system or for switching between two DAB broadcasting systems to implement DAB-DAB switching. Further, although Fig. 2 shows a digital sound processor implementing a cross correlator, a slow forwarding section and a selecting portion, the skilled person will appreciate that the respective functions may also be implemented by software in the digital sound processor which employs one or more processing units (such as one or more CPUs/DSPs) which may perform the respective function. Moreover, while the components of Fig. 2 are shown as respective function blocks in a schematic block diagram, the skilled person knows from the skill in the art how to implement each of the blocks according to their respective function as described above. Moreover, in this disclosure terms such as "first" and "second", etc., are used merely as labels and are not intended to impose numerical requirements on their objects. Other embodiments and modifications within the scope of the claims will be apparent to those of skill in the art upon studying the above description in connection with the drawings.

## Claims

1. An audio processing device, comprising:
- a first input (IN1) configured to receive a first audio signal (31) indicative of an analog or digital audio broadcasting signal (21) and a second input (IN2) configured to receive a second audio signal (32) indicative of an analog or digital audio broadcasting signal (22),
- a signal processing circuit (11) coupled to receive the first audio signal (31) and the second audio signal (32) and configured to determine a time delay (At) between the first audio signal (31) and the second audio signal (32),
- wherein the signal processing circuit (11) is configured to slow forward one of the first and second audio signals (31, 32) to produce a slow forwarded audio signal (50) within a particular period of time (t1) in response to the determined time delay (Δt), wherein the slow forwarded audio signal (50) is produced such that a time difference between the slow forwarded audio signal and the other of the first and second audio signals is reduced within the period of time (t1),
- an output (OUT) configured to supply an audio output signal (60) derived from the slow forwarded audio signal (50) or the other of the first and second audio signals (31, 32).

2. The audio processing device of claim 1, wherein
the signal processing circuit (11) is configured to provide the slow forwarded audio signal (50) to the output (OUT) for audio output from a speaker during the period of time (t1).

3. The audio processing device of claim 1 or 2, wherein
the signal processing circuit (11) is configured to slow forward one of the first and second audio signals (31, 32) until the slow forwarded audio signal (50) is synchronous to the other of the first and second audio signals (31, 32).

4. The audio processing device of one of claims 1 to 3, further comprising
a selecting portion (14) for selecting the slow forwarded audio signal (50) or the other of the first and second audio signals (31, 32).

5. The audio processing device of claim 4, wherein
the selecting portion (14) is coupled to a control input for receiving a user's instruction (42) for selecting one of the first audio signal (31) and second audio signal (32).

6. The audio processing device of one of claims 1 to 5, wherein
the signal processing circuit (11) comprises a signal correlating portion (12) coupled to receive the first audio signal (31) and the second audio signal (32) to determine the time delay (At).

7. The audio processing device of one of claims 1 to 6, wherein the signal processing circuit (11) is coupled to at least one memory circuit (15) for temporarily storing at least one of the first audio signal (31) and the second audio signal (32), particularly storing at least the one of the first and second audio signals (31, 32) which is prior to the respective other of the first and second audio signals (31, 32).

8. The audio processing device of one of claims 1 to 7, wherein
- an analog audio receiving circuit (16) having an input for receiving an analog audio broadcasting signal (21) and having an output to provide the first audio signal (31) is coupled to the first input (IN1), and
- a digital audio receiving circuit (17) having an input for receiving a digital audio broadcasting signal (22) and having an output to provide the second audio signal (32) is coupled to the second input (IN2).

9. The audio processing device of claim 8, wherein
the analog audio receiving circuit (16) and the digital audio receiving circuit (17) are coupled to the first input (IN1) and to the second input (IN2), respectively, through at least one signal path (12S) for transmitting digital signals.

10. A method for processing audio signals, comprising:
- receiving a first audio signal (31) indicative of an analog or digital audio broadcasting signal (21) and a second audio signal (32) indicative of an analog or digital audio broadcasting signal (22),
- determining a time delay (Δt) between the first audio signal (31) and the second audio signal (32),
- slow forwarding one of the first audio signal (31) and the second audio signal (32) to produce a slow forwarded audio signal (50) within a particular period of time (t1) in response to the determined time delay (Δt), wherein the slow forwarding is adjusted such as to reduce a time difference between the slow forwarded audio signal (50) and the other of the first and second audio signals (31, 32) within the period of time (t1),
- supplying an audio output signal (60) derived from the slow forwarded audio signal (50) or the other of the first and second audio signals (31, 32).

11. The method of claim 10, wherein
the audio output signal (60) derived from the slow forwarded audio signal (50) is supplied to a speaker during the period of time (t1).

12. The method of claim 10 or 11, wherein
the one of the first and second audio signals (31, 32) is slow forwarded until it is synchronous to the other of the first and second audio signals (31, 32).

13. The method of one of claims 10 to 12, further comprising
temporarily storing in a memory (15) at least the one of the first and second audio signals (31, 32) which is slow forwarded, and providing an audio output signal (60) from audio signals stored in the memory during and after the period of time (t1).
